Europäisches Patentamt

(19) European Patent Office

Office européen des brevets

(11) Numéro de publication : **0 283 457 B1**

# (12) FASCICULE DE BREVET EUROPEEN

(45) Date de publication du fascicule du brevet :
04.09.91 Bulletin 91/36

(51) Int. Cl.⁵ : **A01N 25/30, A01N 37/06, A01N 41/02**

(21) Numéro de dépôt : 88870035.8

(22) Date de dépôt : 03.03.88

(54) **Procédé pour améliorer les propriétés organoleptiques de vins.**

(30) Priorité : 13.03.87 FR 8703495

(43) Date de publication de la demande :
21.09.88 Bulletin 88/38

(45) Mention de la délivrance du brevet :
04.09.91 Bulletin 91/36

(84) Etats contractants désignés :
AT CH DE ES GR IT LI LU

(56) Documents cités :
FR-A- 2 454 759

(56) Documents cités :
JOURNAL OF THE SCIENCE OF FOOD AND
AGRICULTURE, vol. 34, 1983, pages
1215-1228, Oxford GB; P. MAY et al.: "Effects
of varying the method of applying alkaline
emulsion on the drying of sultana grapes"
E.G. THOMSSEN et al.: "Soaps and detergents", 1949, pages 259-261,330-335, Mac
Nair-Dorland Co., New York, US

(73) Titulaire : AMCHIM S.A.
Boulevard des Alliés, 296
B-7700 Mouscron (BE)

(72) Inventeur : Vanysacker, Yves
Chaussée d'Aalbeke, 263
B-7700 Mouscron (BE)

(74) Mandataire : Gaspar, Florent et al
Bureau Vander Haeghen S.A. Rue Colonel
Bourg 108 A
B-1040 Bruxelles (BE)

## Description

La présente invention est relative à un procédé pour améliorer les propriétés organoleptiques de vins.

On sait que la cuticule des raisins est recouverte d'une mince couche de cire qui la rend hydrophobe et imperméable à l'eau, de sorte qu'aucune déshydratation du contenu des raisins n'est pratiquement possible lorsque le degré hygrométrique de l'air ambiant est faible.

L'inhibition de cette déshydratation empêche un enrichissement en extrait sec du contenu des baies et influence, par conséquent, défavorablement la teneur en sucres des raisins, ce qui conduit les viticulteurs à chaptaliser les moûts de vinification en vue d'augmenter la teneur en alcool du vin.

On a découvert à présent qu'il est possible, en traitant des raisins sur pieds destinés à la vinification, peu de temps avant leur récolte, d'améliorer de manière surprenante les propriétés organoleptiques des vins obtenus à partir de ces raisins par les procédés de vinification classiques.

Cette amélioration des propriétés organoleptiques se manifeste aussi bien pour les vins liquoreux ou doux que pour les vins secs.

Cette amélioration des propriétés organoleptiques s'accompagne d'une augmentation remarquable de la teneur en alcool des vins.

L'invention concerne un procédé pour améliorer les propriétés organoleptiques de vins, ce procédé étant essentiellement caractérisé en ce qu'on traite des raisins destinés à la vinification, moins d'un mois avant la récolte, à l'aide d'une composition contenant, comme ingrédient actif, un agent tensio-actif anionique rendant la cuticule des raisins hydrophile, cet agent tensio-actif anionique étant un sel de métal alcalin, de préférence de potassium, d'un acide gras insaturé comportant au moins 16 et, de préférence, 18 atomes de carbone, ou un sel de métal alcalin, de préférence de potassium, d'alcools gras sulfatés contenant une proportion notable d'alcools en $C_{16}$ à $C_{18}$, ou encore une huile sulfonée telle que du sulfooléate ou sulforicinoléate de métal alcalin.

Dans une forme de réalisation du procédé suivant l'invention, on pulvérise sur les raisins sur pieds une suspension aqueuse contenant moins de 20% en volume d'une composition comportant un ingrédient actif, à raison de 5 à 50 litres par hectare, pendant la période de temps s'étendant de 5 à 20 jours avant la récolte des raisins.

Dans une forme d'exécution préférée du procédé suivant l'invention, on pulvérise une seule fois une suspension aqueuse contenant 10% en volume d'une composition comportant un ingrédient actif, à raison de 20 à 40 litres par hectare.

Dans le procédé suivant l'invention, l'ingrédient actif de la composition utilisée est avantageusement une huile alimentaire, de préférence végétale, partiellement saponifiée, cette huile contenant de préférence au moins un acide ou alcool gras insaturé, comportant au moins 16 et, de préférence, 18 atomes de carbone.

Le degré de saponification de l'huile est avantageusement compris entre 10 et 70%, de préférence entre 20 et 40%.

L'huile partiellement saponifiée préférée est une huile contenant une quantité notable, de préférence prépondérante, d'acide ou d'alcool oléique.

Comme huiles végétales partiellement saponifiées, on peut utiliser une huile choisie parmi les huiles d'olive, de coco, de palme, de carthame, de soja, de colza, de tournesol, de maïs, d'arachide, d'amandes, de sésame et de pépins de raisins.

L'huile alimentaire à teneur élevée en acides gras à longue chaîne partiellement saponifiés à l'aide d'un hydroxyde de métal alcalin tel que NaOH ou, de préférence KOH, est avantageusement additionnée d'une petite quantité d'alcool aliphatique inférieur, de préférence d'éthanol ou d'isopropanol.

Dans la composition utilisée suivant l'invention, l'ingrédient actif est constitué avantageusement de 50 à 80, de préférence 60 à 70 parties en poids d'au moins une huile alimentaire comportant des acides gras insaturés à au moins 16 atomes de carbone, saponifiés avec 5 à 25, de préférence 10 à 20 parties en poids d'hydroxyde de potassium, cette huile étant additionnée de 5 à 30, de préférence de 15 à 25 parties en poids d'éthanol.

Les exemples suivants illustrent, à titre non limitatif, la préparation de compositions utilisables dans le procédé suivant la présente invention :

## Exemple 1 : Composition concentrée

70 parties en poids d'huile d'olive et 20 parties en poids d'éthanol sont mélangées lentement à la température ambiante avec 10 parties en poids d'une solution à 50% de KOH. La température s'élève jusqu'à 35°C. Après 5 minutes, la réaction est terminée et on obtient un concentrat clair.

### Exemple 2 : Composition concentrée

74 parties en poids d'huile de coco et 20 parties en poids d'éthanol sont additionnées à la température ambiante de 16 parties en poids d'une solution aqueuse à 50% de KOH. La température atteint 40°C. Après 5 minutes de malaxage, on obtient un concentrat clair.

### Exemples 3 à 6 : Compositions concentrées

On opère de la manière décrite dans l'exemple 1, en utilisant respectivement de l'huile de palme, de l'huile de soja, de l'huile de maïs et de l'huile de colza. Dans chaque cas, on obtient un concentrat clair.

### Exemple 7 : Composition concentrée

On saponifie 70 parties en poids d'huile de carthame oléique contenant 80% d'acide oléique avec 8 parties en poids d'une solution à 50% de KOH, en présence d'isopropanol (15 parties en poids). On obtient un concentrat clair ayant tendance à se gélifier.

### Exemples 8 à 14 : Compositions diluées prêtes à l'emploi

Les compositions concentrées des exemples 1 à 7 sont mélangées à de l'eau, de manière à obtenir des suspensions contenant 10% des compositions concentrées, utilisables pour pulvériser des raisins sur pieds.

Des essais effectués peu avant les vendanges en 1984 et 1986 ont permis de démontrer que le procédé suivant l'invention produit des effets dont la nature ou l'ampleur est inattendue pour l'homme du métier.

Ces essais ont été effectués à l'aide d'une composition formée à partir de 70 parties en poids d'huile d'olive saponifiée par 10 parties en poids d'hydroxyde de potassium et additionnée de 20 parties en poids d'éthanol.

### Essais n°1

Des essais ont été effectués par l'Ecole de Viticulture et d'Oenologie de La Tour Blanche, Bommes 33210 Langon (France) en 1984 sur un vin liquoreux ou doux de la région sauternaise (cépage : Sémillon).

La composition précitée a été pulvérisée sur trois rangs de vignes d'une parcelle le 8 octobre 1984 à une dose de 40 litres par hectare.

Les raisins des ceps témoins et des ceps traités ont été récoltés en une seule fois le 18 octobre 1984. L'analyse des moûts extraits des raisins témoins et traités a donné les résultats donnés dans le tableau I suivant :

## TABLEAU I

|  | Moût de raisins témoins | Moût de raisins traités |
|---|---|---|
| sucres g/l | 234 | 290 |
| alcool potentiel % volume | 13,7 | 17 |
| acidité totale g/l $H_2SO_4$ | 3,8 | 4,4 |
| volume de jus recueillis hl/ha | 23 | 16,5 |

Ce tableau I révèle une augmentation légère de l'acidité totale du moût de raisins traités. Cette augmentation d'acidité est considérée par les spécialistes comme particulièrement souhaitable pour les vins blancs liquoreux ou doux.

Le tableau I montre aussi une augmentation sensible de la teneur en sucre du moût des raisins traités, ainsi qu'une augmentation remarquable (3,3% en volume) du titre alcoométrique potentiel de ce moût.

Les moûts ont été vinifiés et les vins ont été dégustés et analysés.

Le vin provenant des raisins témoins était aromatique mais décevant en bouche par son manque de caractère, tandis que le vin provenant des raisins traités présentait une grande richesse aromatique et gustative, tout en restant très franc.

L'analyse de ces vins a donné les résultats indiqués dans le tableau II suivant :

## TABLEAU II

|  | vin<br>raisins témoins | vin<br>raisins traités |
|---|---|---|
| acidité totale g/l $H_2SO_4$ | 4,1 | 4,5 |
| extrait sec total g/l | 117,8 | 152,6 |
| extrait sec réduit g/l | 34,1 | 42,9 |
| alcool total % volume | 16,9 | 19,2 |

Les résultats donnés dans ce tableau II confirment les effets bénéfiques du traitement suivant l'invention, notamment l'augmentation surprenante de l'acidité totale considérée comme particulièrement bénéfique pour les vins de la région sauternaise. L'augmentation de la teneur en alcool du vin obtenu à partir des raisins traités est également remarquable.

### Essais n°2

Des essais ont été effectués sur des raisins du cépage Sauvignon sur des parcelles ayant 6600 ceps par hectare.

Les ceps des parcelles traitées ont été soumis à une pulvérisation à une dose de 40 litres par hectare de la composition précitée.

Les dates des traitements et des récoltes sont indiquées dans le tableau III suivant.

## TABLEAU III

| Cépage | Date de traitement | Date de récolte |
|---|---|---|
| SAUVIGNON | 19/9/86 | 29/9/86 |

L'analyse des raisins témoins et traités a donné les résultats figurant dans le tableau IV suivant.

### TABLEAU IV

| Cépages | alcool potentiel en % volume | acidité totale g/l $H_2SO_4$ |
|---|---|---|
| Sauvignon témoin traité | 9,5 10,2 | 6,7 6,6 |

Ce tableau IV montre également une augmentation sensible du titre alcoométrique et une légère diminution de l'acidité totale. On voit que, contrairement à l'attente de l'homme du métier, l'augmentation sensible du titre alcoométrique n'influence pas défavorablement l'acidité du jus.

Les raisins ont ensuite été vinifiés en caves et les vins blancs secs obtenus après chaptalisation présentaient les propriétés analytiques suivantes :

### TABLEAU V

| | alcool % volume | acidité totale g/l $H_2SO_4$ |
|---|---|---|
| Sauvignon témoin | 12,5 | 5,6 |
| Sauvignon traité | 12,9 | 4,8 |

Ce tableau V révèle que le traitement par le procédé suivant l'invention a pour effet de diminuer quelque peu l'acidité totale du vin qui, dans ce cas, est un vin blanc sec.

Cette diminution d'acidité est considérée comme favorable sur le plan des caractères organoleptiques du vin et contraste avec l'augmentation de l'acidité constatée dans les vins blancs doux (essai n°1).

Essais n°3

Des essais ont été effectués sur des parcelles comportant 6600 pieds par hectare de cépages Gamay et Cabernet Franc. La composition précitée a été pulvérisée à l'atomiseur sur des vignes effeuillées manuellement à raison de 40 litres par hectare. Le tableau suivant donne les dates de traitement et de vendange pour les différents cépages.

## TABLEAU VI

| Cépages | Date du traitement | Date de récolte |
|---------|--------------------|-----------------|
| Gamay | 26/9/86 | 7/10/86 |
| Cabernet Franc | 10/10/86 | 21/10/86 |

L'analyse des raisins témoins et traités a donné les résultats figurant dans le tableau VII suivant.

## TABLEAU VII

| Cépages | alcool potentiel en % volume | acidité totale en g/l $H_2SO_4$ |
|---------|------------------------------|--------------------------------|
| Gamay témoin | 10,7 | 8,8 |
| traité | 12 | 8,7 |
| Cabernet Franc témoin | 9,5 | 8,0 |
| traité | 10,2 | 7,6 |

Ce tableau VII montre que l'acidité totale du moût des raisins traités est comparable à celle du moût des

7

raisins non traités, contrairement à ce que l'on aurait pu craindre, tandis que l'augmentation du degré alcoométrique potentiel est remarquable.

Les raisins ont ensuite été vinifiés et ont donné des vins rouges qui présentaient les propriétés analytiques suivantes :

## TABLEAU VIII

| Cépages | alcool en % volume | acidité totale | D280 |
|---|---|---|---|
| Gamay témoin | 10,45 | 2,7 | 0,262 |
| traité | 11,55 | 2,5 | 0,338 |
| Cabernet Franc témoin | 11,5 | 3,2 | 0,32 |
| traité | 12,30 | 3,2 | 0,364 |

L'indice D280 a été déterminé par la méthode décrite par J. RIBEREAU-GAYON, P. RIBEREAU-GAYON, E. PEYNAUD et P. SUDRAUD dans le "Traité d'Oenologie", Sciences et Techniques du Vin, (Dunod), 1972, Tome 1, page 494.

Cet indice D280 mesure la quantité de composés phénoliques présents dans le vin. Ces composés phénoliques influencent la couleur et le goût du vin.

On considère que les propriétés organoleptiques d'un vin rouge sont d'autant meilleures que sa teneur en composés phénoliques est importante.

Le tableau VIII montre une augmentation inattendue de l'indice D280 des vins obtenus à partir de raisins traités par le procédé suivant la présente invention.

Cette augmentation de l'indice D280 s'accompagne d'une augmentation notable de la teneur en alcool des vins, sans modification notable de leur acidité totale.

## Essais n°4

Ces essais ont été effectués en 1986 au domaine de "La Tour Blanche" à BOMMES, Langon (France) sur des parcelles comportant 2800 pieds de cépage Merlot par hectare.

La composition précitée a été pulvérisée au moyen d'un atomiseur à raison de 20 litres et 40 litres par hectare. Le tableau suivant donne les dates de traitement et de vendange.

## TABLEAU IX

| quantité pulvérisée litre/hectare | date du traitement | Date de la vendange |
|---|---|---|
| 20 | 1/10/86 | 11/10/86 |
| 40 | 1/10/86 | 11/10/86 |

L'analyse des raisins témoins et traités a donné les résultats figurant dans le tableau suivant.

## TABLEAU X

| | alcool potentiel en % volume | acidité totale en g/l $H_2SO_4$ |
|---|---|---|
| Merlot témoin | 9,9 | 4,9 |
| traité à 20 l/ha | 10,1 | 4,9 |
| traité à 40 l/ha | 10,55 | 4,6 |

Ce tableau met en évidence que l'augmentation notable du degré alcoométrique n'a pas provoqué un accroissement de l'acidité totale du moût des raisins traités.

Les raisins ont ensuite été vinifiés et ont donné des vins rouges qui présentaient les propriétés analytiques suivantes :

TABLEAU XI

|  | alcool en % volume | acidité totale en g/l $H_2SO_4$ | D280 | IC' |
|---|---|---|---|---|
| Merlot |  |  |  |  |
| témoin | 10,61 | 2,8 | 0,314 | 0,691 |
| traité à 20 l/ha | 11,30 | 2,8 | 0,35 | 0,918 |
| traité à 40 l/ha | 11,90 | 3,1 | 0,372 | 0,937 |

Le tableau XI montre les effets bénéfiques suivants du traitement des ceps Merlot de "La Tour Blanche" :
— les vins rouges obtenus à partir de raisins traités ont une teneur en composés phénoliques (valeurs de l'indice D280) étonnamment supérieure à celle des vins provenant de raisins non traités ;
— l'indice de coloration IC' (déterminé par la méthode de SUDRAUD-GLORIES ; "La couleur des vins rouges, connaissance de la vigne et du vin", n°4, 1984, Y. GLORIES) qui mesure la somme des interventions du rouge, du jaune et du bleu dans la couleur du vin, se révèle nettement supérieur à celui du vin provenant de raisins non traités ;
— la teneur en alcool des vins provenant de raisins traités est également nettement supérieure à celle du vin obtenu à partir de raisins non traités tandis que l'acidité de ces vins reste comparable.

L'homme du métier ne pouvait nullement prévoir ces effets, en particulier les augmentations notables des indices D280 et IC'.

Essais n°5

Ces essais ont été effectués en 1986 au domaine de Monsieur Roy à Chorey-les-Beaunes (France) sur des parcelles de Pinot Noir. Le traitement à raison de 40 litres par hectare a été réalisé 12 jours avant la récolte (30 septembre 1986).

Le moût des raisins traités présentait un degré alcoométrique de 11% en volume et une acidité totale de 6,3 g/l $H_2SO_4$, ce qui correspond à un accroissement de 19,6% du degré alcoométrique et une diminution de 13,7% de l'acidité totale, par rapport au degré alcoométrique et à l'acidité totale du moût des raisins non traités, la diminution inexplicable de l'acidité totale étant considérée comme bénéfique pour des raisins de cépage Pinot Noir.

Après vinification, le vin obtenu à partir de raisins traités avait plus de couleur et contenait plus de composés phénoliques que le vin obtenu à partir de raisins non traités. L'indice D280 pour le vin obtenu à partir de raisins traités était supérieur de 7% à celui du vin obtenu à partir de raisins non traités, et l'indice IC' du vin de raisins traités était supérieur de 33% à celui du vin de raisins non traités.

Le procédé pour le traitement de raisins destinés à la vinification selon l'invention permet d'accroître le degré alcoométrique des raisins et permet donc de ne plus devoir ou de ne devoir chaptaliser le vin que dans une bien moindre mesure.

Les quantités nécessaires de la composition à utiliser suivant l'invention peuvent varier entre 5 et 50 litres par hectare, cette quantité étant fonction du cépage, du degré de maturité du raisin, du type de pruine, du climat, de la nature du sol, etc.

Les compositions suivant l'invention ont, au surplus, un effet fongistatique en ce sens qu'elles permettent de stabiliser la pourriture des raisins, c'est-à-dire de stabiliser le développement du Botrytis cinerea. Le Botrytis cinerea a un effet bénéfique pour l'élaboration de vin blanc liquoreux ou doux et un effet non désiré et désagréable pour les vins rouges et les vins blancs secs. Cette stabilisation du développement du Botrytis cinerea permet d'obtenir des vins légèrement plus acides pour les vins blancs liquoreux, ce qui est préférable pour ce type de vin, et d'obtenir des vins blancs secs et des vins rouges moins acides, ce qui est également souhaitable pour le goût de ces vins.

Comme on l'a vu plus haut, le procédé suivant l'invention permet non seulement d'accroître sensiblement le degré d'alcool des vins, tout en augmentant leur acidité totale dans le cas des vins blancs liquoreux ou doux et en maintenant ou diminuant quelque peu leur acidité totale dans le cas des vins rouges et des vins blancs secs.

Le procédé suivant l'invention assure également une amélioration surprenante des propriétés organoleptiques (indices D280 et IC') des vins rouges.

## Revendications

1. Procédé pour améliorer les propriétés organoleptiques de vins, caractérisé en ce qu'on traite des raisins destinés à la vinification, sur pieds, moins d'un mois avant la récolte, à l'aide d'une composition contenant, comme ingrédient actif un agent tensio-actif anionique rendant la cuticule des raisins hydrophile, cet agent tensio-actif anionique étant un sel de métal alcalin, de préférence de potassium, d'acide gras insaturé comportant au moins 16, de préférence 18 atomes de carbone ou un sel de métal alcalin, de préférence de potassium, d'alcools gras sulfatés contenant une proportion notable d'alcools en $C_{16}$ à $C_{18}$ ou une huile sulfonée.

2. Procédé suivant la revendication 1, caractérisé en ce qu'on pulvérise sur les raisins sur pieds, pendant la période de temps s'étendant de 5 à 20 jours avant leur récolte, une suspension aqueuse contenant moins de 20% en volume d'une composition comportant un ingrédient actif, à raison d'environ 5 à 50 litres par hectare.

3. Procédé suivant la revendication 2, caractérisé en ce qu'on pulvérise une seule fois une suspension aqueuse contenant 10% en volume d'une composition comportant un ingrédient actif à raison de 20 à 40 litres par hectare.

4. Procédé suivant l'une quelconque des revendications précédentes, caractérisé en ce qu'on utilise comme agent tensio-actif une huile alimentaire, de préférence végétale, partiellement saponifiée, cette huile, contenant de préférence au moins un acide ou alcool gras insaturé comportant au moins 16, et de préférence, 18 atomes de carbone.

5. Procédé suivant la revendication 4, caractérisé en ce qu'on utilise une huile dont le degré de saponification est compris entre 10 et 70%, de préférence entre 20 et 40%.

6. Procédé suivant la revendication 4, caractérisé en ce qu'on utilise comme huile partiellement saponifiée, une huile contenant une quantité notable, de préférence prépondérante, d'acide ou d'alcool oléique.

7. Procédé suivant la revendication 4, caractérisé en ce qu'on utilise une huile choisie parmi les huiles d'olive, de coco, de palme, de carthame, de soja, de colza, de tournesol, de maïs, d'arachide, d'amandes, de sésame et de pépins de raisins.

8. Procédé suivant l'une quelconque des revendications 4 à 7, caractérisé en ce qu'on utilise une huile alimentaire à teneur élevée en acides gras à longue chaîne partiellement saponifiés à l'aide d'un hydroxyde de métal alcalin, de préférence de l'hydroxyde de potassium, additionnée d'une petite quantité d'un alcool aliphatique inférieur, de préférence d'éthanol ou d'isopropanol.

9. Procédé suivant l'une quelconque des revendications 5 à 9, caractérisé en ce qu'on utilise une composition dont l'ingrédient actif est constitué de 50 à 80, de préférence 60 à 70 parties en poids, d'au moins une huile alimentaire comportant des acides gras insaturés à au moins 16 atomes de carbone, saponifiés avec environ 5 à 25, de préférence 10 à 20 parties en poids d'hydroxyde de potassium, cette huile étant additionnée de 5 à 30, de préférence 15 à 25 parties en poids d'éthanol.

## Patentansprüche

1. Verfahren zum Verbessern der organoleptischen Eigenschaften von Weinen, dadurch gekennzeichnet, daß man für die Vinifikation bestimmte Trauben am Stock weniger als einen Monat vor der Ernte mit einer Zusammensetzung behandelt, die als aktives Ingrediens ein anionisches grenzflächenaktives Mittel enthält, das die Haut der Trauben hydrophil macht, welches anionische grenzflächenaktive Mittel ein Alkalimetallsalz, vorzugsweise das Kaliumsalz, von einer ungesättigten Fettsäure mit mindestens 16, vorzugsweise 18 Kohlenstoffatomen, oder ein Alkalimetallsalz, vorzugsweise das Kaliumsalz, von sulfatierten Fettalkoholen, die einen merklichen Anteil an $C_{16}$- bis $C_{18}$-Alkoholen enthalten, oder ein sulfoniertes Öl ist.

2. Verfahren nach Anspruch 1, dadurch gekennzeichnet, daß man während eines Zeitraums, der sich über 5 bis 20 Tage vor der Ernte erstreckt, eine wässerige Suspension, die weniger als 20 Vol.% einer ein aktives Ingrediens enthaltenden Zusammensetzung enthält, in einer Menge von etwa 5 bis 50 Litern pro Hektar über die Trauben am Stock zerstäubt.

3. Verfahren nach Anspruch 2, dadurch gekennzeichnet, daß man ein einziges Mal eine wässerige Suspension, die 10 Vol.% einer ein aktives Ingrediens umfassenden Zusammensetzung enhält, in einer Menge von 20 bis 40 Litern pro Hektar zerstäubt.

4. Verfahren nach einem der vorhergehenden Ansprüche, dadurch gekennzeichnet, daß man als grenzflächenaktives Mittel ein teilweise verseiftes Speiseöl, vorzugsweise Pflanzenöl, verwendet, welches Öl vorzugsweise mindestens eine ungesättigte Fettsäure oder einen ungesättigten Fettalkohol, umfassend mindestens 16, vorzugsweise 18 Kohlenstoffatome, enthält.

5. Verfahren nach Anspruch 4, dadurch gekennzeichnet, daß man ein Öl verwendet, dessen Verseifungsgrad zwischen 10 und 70%, vorzugsweise 20 und 40%, liegt.

6. Verfahren nach Anspruch 4, dadurch gekennzeichnet, daß man als teilweise verseiftes Öl ein Öl verwendet, welches eine beträchtliche, vorzugsweise vorherrschende Menge an Oleinsäure oder -alkohol enthält.

7. Verfahren nach Anspruch 4, dadurch gekennzeichnet, daß man ein Öl, ausgewählt aus Olivenöl, Kakaoöl, Palmöl, Safloröl, Sojaöl, Rapsöl, Lackmusöl, Maisöl, Erdnußöl, Mandelöl, Sesamöl und Traubenkernöl verwendet.

8. Verfahren nach einem der Ansprüche 4 bis 7, dadurch gekennzeichnet, daß man ein Speiseöl mit einem erhöhten Gehalt an Fettsäuren mit langer Kette, welche mit Hilfe eines Alkalimetallhydroxids, vorzugsweise Kaliumhydroxid, teilweise verseift worden sind, versetzt mit einer kleinen Menge eines niedrigen aliphatischen Alkohols, vorzugsweise Ethanol oder Isopropanol, verwendet.

9. Verfahren nach einem der Ansprüche 5 bis 9, dadurch gekennzeichnet, daß man eine Zusammensetzung verwendet, deren aktives Ingrediens aus 50 bis 80, vorzugsweise 60 bis 70 Gewichtsteilen mindestens eines Speiseöls besteht, welches ungesättigte Fettsäuren mit mindestens 16 Kohlenstoffatomen, die mit etwa 5 bis 25, vorzugsweise 10 bis 20 Gewichtsteilen Kaliumhydroxid verseift worden sind, umfaßt, welches Öl mit 5 bis 30, vorzugsweise 15 bis 25 Gewichtsteilen Ethanol versetzt ist.

## Claims

1. Process for improving the organoleptic properties of wines, characterized in that grapes intended for wine production are treated, while standing, less than one month before the harvest by means of a composition containing, as active ingredient, at least one anionic surface-active agent rendering the cuticle of the grapes hydrophilic, said anionic surface-active agent being an alkali metal, preferably potassium, salt of an unsaturated fatty acid containing at least 16 and preferably 18 carbon atoms or an alkali metal, preferably potassium, salt of sulphate-containing fatty alcohols containing a significant proportion of $C_{16}$ to $C_{18}$ alcohols, or a sulphonated oil.

2. Process according to claim 1, characterized in that the standing grapes are sprayed during the period of time ranging from 5 to 20 days before the harvesting thereof with an aqueous suspension containing less than 20% by volume of a composition comprising at least one active ingredient at a rate of about 5 to 50 litres per hectare.

3. Process according to claim 2, characterized in that an aqueous suspension containing 10% by volume of a composition containing at least one active ingredient is sprayed once at a rate of 20 to 40 litres per hectare.

4. Process acccording to anyone of the preceding claims, characterized in that an edible, preferably vegetable, partially saponified oil, is used as active ingredient, this oil preferably containing at least one unsaturated fatty acid or alcohol comprising at least 16 and preferably 18 carbon atoms.

5. Process according to claim 4, characterized in that an oil having a degree of saponification of between 10 and 70%, preferably between 20 and 40%, is used.

6. Process according to claim 4, characterized in that an oil containing a significant and preferably preponderant quantity of oleic acid or alcohol is used as partially saponified oil.

7. Process according to claim 4, characterized in that an oil selected from olive, coconut, palm, safflower, soya, rapeseed, sunflower, corn, ground-nut, almond, sesame and grape pip oils is used.

8. Process according to anyone of the claims 4 to 7, characterized in that there is used an edible oil having a high content of long chain fatty acids which are partially saponified by means of an alkali metal hydroxide, preferably potassium hydroxide to which a small quantity of a lower aliphatic alcohol, preferably ethanol or isopropanol, has been added.

9. Process according to anyone of the claims 5 to 9, characterized in that there is used a composition, the active ingredient of which is constituted by 50 to 80, preferably 60 to 70 parts by weight of at least one edible oil comprising unsaturated fatty acids containing at least 16 carbon atoms, which are saponified with about 5 to 25, preferably 10 to 20 parts by weight of potassium hydroxide, to which oil 5 to 30, preferably 15 to 25 parts by weight of ethanol, have been added.